# EUROPEAN PATENT APPLICATION

(11) **EP 4 471 938 A1**
(43) Date of publication of application: **04.12.2024**
(21) Application number: 23177035.5
(22) Date of filing: 02.06.2023
(51) Int. Cl.: H01M 10/625, B60K 1/04, B60L 50/64, H01M 50/204, H01M 50/229, H01M 50/236, H01M 50/242, H01M 50/244, H01M 50/256, H01M 50/262, H01M 50/264

(54) **DUAL MATERIAL MODULE SUPPORT**

(71) Applicant: Rimac Technology LLC, 10431 Sveta Nedelja (HR)
(72) Inventor: Walchester, Alan Leigh, Warwick, CV345PD (GB); Henry, David John, West Midlands, B62 8TR (GB); Marasovic, Mark, 10000 Zagreb (HR)
(74) Representative: Hoffmann Eitle

(57) **Abstract**

There is provided a battery assembly (100) comprising a cell module (110, 200), a side part (120) and a fixation part (130). The cell module (110, 200) comprises a plurality of cells (210). Tside part (120) is made of a first material and is secured to a first side (111) of the cell module (110, 200), wherein the first material is electrically non-conductive. The fixation part (130) is made of a second material and is secured to and extending from the side part (120), wherein the second material is stiffer than the first material.

## Description

### [Field]

Example aspects herein generally relate to the field of mounted battery systems and, more particularly, to mounted battery systems in electric vehicles.

### [Background]

Vehicles of various kinds can be driven by electrical means by drawing energy from an energy storage system. Such an energy storage system, in most cases, includes batteries either as the primary energy source of the system or as a contributary energy source of the system, such as in a hybrid energy storage system. Where batteries are utilised in the energy storage system, it is often necessary to connect a plurality of (battery) cells in series and/or parallel to meet the high voltage and current requirements of the vehicle drive system. These connected cells are often grouped as cell modules which are secured to a battery mount within an electric vehicle.

Presently, such cell modules have sides which secure to the battery mount and which are made of a polymer to reduce the short circuit potential between the connected cells within the cell module. However, polymers have a lower load capacity than is desirable for the forces present under the operating conditions of the electric vehicle and the moulding process used often produces parts which poorly fit with the battery mount (i.e., due to contraction in the cooling process).

### [Summary]

The present inventors have devised, in accordance with a first example aspect herein, a battery assembly comprising a cell module which comprises a plurality of cells, a side part, of a first material, which is secured to a first side of the cell module wherein the first material is electrically non-conductive, and a fixation part, of a second material, which is secured to and extending from the side part wherein the second material is stiffer than the first material.

The present inventors have also devised, in accordance with a second example aspect herein, a mounted battery system comprising a battery mount which comprises a mount base and a first mount portion extending from the mount base, and a first battery assembly according to the first example aspect herein wherein the fixation part of the first battery assembly is secured to the first mount portion of the battery mount.

The present inventors have also devised, in accordance with a third example aspect herein, a mounted battery system according to the second example aspect herein for an electric vehicle.

### [Brief Description of the Drawings]

Example embodiments herein will now be explained in detail, by way of non-limiting example only, with reference to the accompanying figures described below. Like reference numerals appearing in different figures can denote identical or functionally similar elements, unless indicated otherwise.
Figure 1 is a schematic illustration of a battery assembly 100, according to a first example embodiment herein.
Figure 2 is a schematic illustration of an example cell module 200.
Figure 3 is a schematic illustration of side part 300 and a fixation part 350, according to the first example embodiment.
Figures 4A and 4B are schematic illustrations of cross-sections of an alternative fixation part 400 and an alternative fixation part 450, respectively, which may be used in the first example embodiment.
Figure 5A is a schematic illustration of a cross-sectional view of an example side part 510 and an example fixation part 520 which are secured together with dovetail joints.
Figure 5B is a schematic illustration of a cross-sectional view of an example side part 560 and an example fixation part 570 which are secured together by heat staking.
Figure 6 is a schematic illustration of an example fixation part 600 comprising a plurality of holes and indentations where overmoulding is used.
Figure 7 is a schematic illustration of a cross-sectional view of a side part 710 and a fixation member 720 according to an alternative implementation of the first example embodiment.
Figures 8A, 8B and 8C are schematic illustrations of fixation parts 800, 830 and 860, respectively, which may be used in the alternative implementation.
Figure 9A is a schematic illustration of a cross-sectional view of a side part 1010 and a fixation parts 1020 and 1030 according to a second alternative implementation of the first example embodiment.
Figure 9B is a schematic illustration of a cross-sectional view of a side part 1040 and a fixation part 1050, which may be used in the second alternative implementation.
Figure 9C is a schematic illustration of a cross-sectional view of a side part 1070 and a fixation part 1080, 1090, which may be used in the second alternative implementation.
Figures 10A and 10B are schematic illustrations of a partial cross-sectional view and a partial isometric view, respectively, of a mounted battery system 900, according to a second example embodiment herein.
Figure 11A and 11B are schematic illustrations of a partial cross-sectional view and a partial angle view, respectively, of the mounted battery system 900 wherein the side part 1010 and the fixation part 1020 are used.

### [Detailed Description of Embodiments]

In view of the above-described problems with the current means of securing a cell module to a battery mount, the present inventors propose a dual-material securing means comprising a side part of a first electrically insulating material and a fixation part of a second material which is stiffer than the first material. The cell module and the dual-material securing means form parts of a battery assembly, as referred to herein.

The side part is secured to a first side of the cell module, thus providing an electrically insulating barrier between the cell module and the battery mount which reduces the short circuit potential within the cell module.

The fixation part is secured to the side part and is arranged to fix the cell module to the battery mount. Thus, a stiffer material of a higher load capacity can be selected as appropriate for the operating conditions of the electric vehicle (i.e., to better resist bending from the vertical forces on the cell module) without any constraint on its electrical conductivity. This allows the use of metals, parts of which can be manufactured to very tight tolerances to ensure a consistent fit with the battery mount. Further, where fasteners are used to fix the cell module to the battery mount, the clamping load applied to the fixation member can be better resisted by the stiffer, less compressible material, allowing an increased clamping load to be applied which improves the strength of fixation and so reduces the chance of movement of the often very heavy (weights range from 30kg to 130kg, or even greater) cell module over time while subjected to shock and vibration during use.

An example embodiment of the aforementioned battery assembly will now be described in detail with reference to accompanying drawings.

Further, an example embodiment of the battery assembly within a mounted battery system will later be described in detail with reference to additional accompanying drawings.

### [First Example Embodiment]

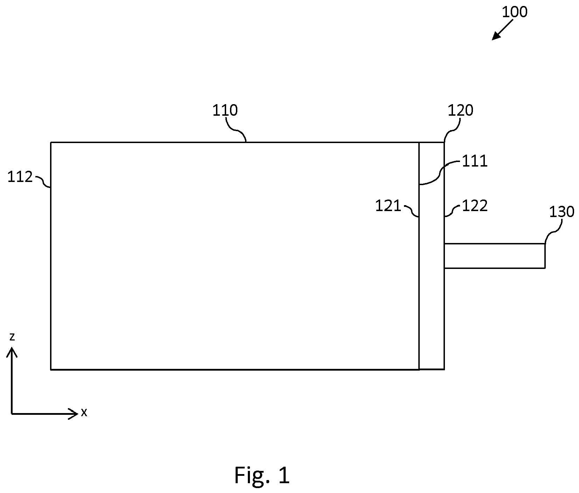

Figure 1 is a schematic illustration of a battery assembly 100 according to a first example embodiment herein. The battery assembly 100 comprises a cell module 110, a side part 120 and a fixation part 130. The cell module 110 comprises a plurality of (battery) cells and has a first side 111 (with a length in the y-direction) and a second opposing side 112.

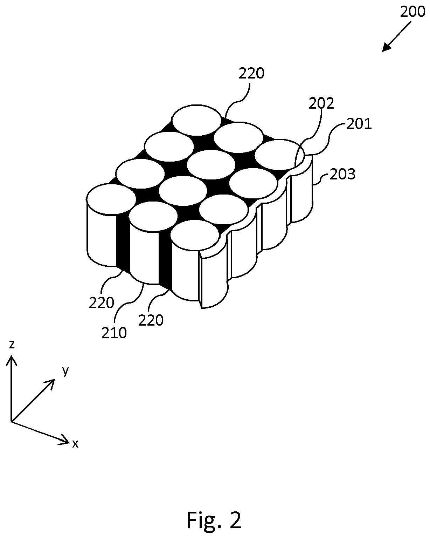

Figure 2 is a schematic illustration of an example cell module 200 which may be the cell module 110. The cell module 200 comprises a plurality of cells 210 arranged fixed relative to each other. That is, the plurality of cells are secured together such that the geometric relationship between each of the plurality of cells 210 is fixed. The plurality of cells 210 are cylindrical cells, each orientated with their respective axial direction in the z-direction. However, the cells may take any shape (i.e., cuboidal) and may be orientated in alternative ways, such as each cell being orientated with its axial direction in the x-direction or each cell having its axial direction at a tilt to the z-direction. The plurality of cells 210 may be electrically connected in series and/or parallel by interconnectors (not shown), which may be provided on either side of the cell module 200 in the z-direction in the uniform block depicted, or elsewhere as appropriate for the above-described alternative arrangements of the plurality of cells 210.

The cell module 200 has a cuboidal shape formed by the plurality of cells 210 being arranged in a uniform block of rows in both the x-direction and the y-direction, as shown by way of example in Figure 2 as three cells per row in the x-direction and four cells per row in the y-direction. However, any number of cells may be arranged within the cell module 200 in any geometric pattern and the cells may be placed above each other in the z-direction if desired. Further, the cell module 200 may alternatively take any shape, such as a trapezoidal prism or a cylinder. In such cases, the first side 111 of the cell module 110 may be a first portion of the cell module 110 which is that adjacent to the side part 120 to which the cell module 200 is secured (as described in more detail below).

The cell module 200 further comprises a potting medium 220, wherein the plurality of cells 210 are arranged fixed relative to each other by the potting medium 220 bonding the plurality of cells 210 together (i.e., such they are fixed relative to each other). For example, the potting medium 220 may be a polyurethane foam, an epoxy structural foam or may comprise an expanding material in combination with an adhesive. However, this may also be achieved in other ways, with or without the potting medium 220, such as the cell module 200 further comprising a cell holder arranged to fix the cells relative to each other (i.e., a frame with cell shaped indentations to receive each cell of the plurality of cells 210, or a frame arranged to hold a potting medium, such as silicone, which secures the cells relative to each other).

The cell module 200 further comprises a cooling element 201 with a first side 202 and a second opposing side 203. The first side 202 of the cooling element 201 is (directly) attached to the plurality of cells 210 (on a first side of the plurality of cells 210 formed by the exteriors of the cells 210 and/or the potting medium 220) and the second side 203 of the cooling element 201 is the first side 111 of the cell module 110 in Figure 1. However, the cooling element 201 is optional and, where omitted, the first side 111 of the cell module 110 in Figure 1 is the first side of the plurality of cells 210 (i.e., the side formed by the exteriors of the cells 210 and/or the potting medium 220 in Figure 2 on the side of the cell module 200 where the cooling element 201 is shown). The cooling element 201 is arranged to regulate the temperature of the plurality of cells 210, such as by providing a path for heat transfer between the plurality of cells 210 and the outside of (or an external entity to) the cell module 210. The cooling element 201 may be a polymer or metallic structure comprising one or more channels arranged for a liquid coolant to flow within. The cell module 200 may further comprise an additional cooling element attached to the plurality of cells 210 on the opposing side of the plurality of cells 210 to the cooling element 201. Where the plurality of cells 210 include additional rows in the y-direction, the cooling element 201 may be extended in the y-direction to attach to each of the additional cells. Similarly, the cooling element 201 may be extended in the z-direction if additional cells are placed above or below the plurality of cells 210.

Returning to Figure 1, the side part 120 is secured to the first side 111 of the cell module 110 and comprises a first side 121 and a second opposing side 122. That is, the first side 121 of the side part 120 is secured to the first side 111 of the cell module 110. As described above with referent to Figure 2, where the example cell module 200 is the cell module 110 and the cooling element 201 is omitted, the first side 121 of the side part 120 may be secured to the first side 111 of the cell module 110 by the first side 121 of the side part 120 being (directly) attached to the first side of the plurality of cells 210. Where the cooling element 201 is provided, as in Figure 2, the first side 121 of the side part 120 may be secured to the first side 111 of the cell module by the first side 121 of the side part 120 being (directly) attached to the second side 203 of the cooling element 201. The side part 120 may, as in the present example embodiment, have a length and height in the y-direction and z-direction, respectively, equal to the length and height of the first side 111 of the cell module 110, although either dimension may respectively be shorter or longer as desired.

The side part 120 is made of a first material which is electrically non-conductive. That is, the side part 120 consists of the first material. The side part 120 may, as in the present example embodiment, be a polymer, such as nylon, or a polymer blend, such as a polycarbonate blend. However, the side part may be any electrically non-conductive material (i.e., with an electrical conductivity less than 40 kV/mm, or within a range of 30 to 40 kV/mm), such as a composite comprising at least one polymer (i.e., fibre-reinforced polymer comprising a polymer or polymer blend, such as a polycarbonate blend, and fibres made out of glass, carbon or aramid, for example).

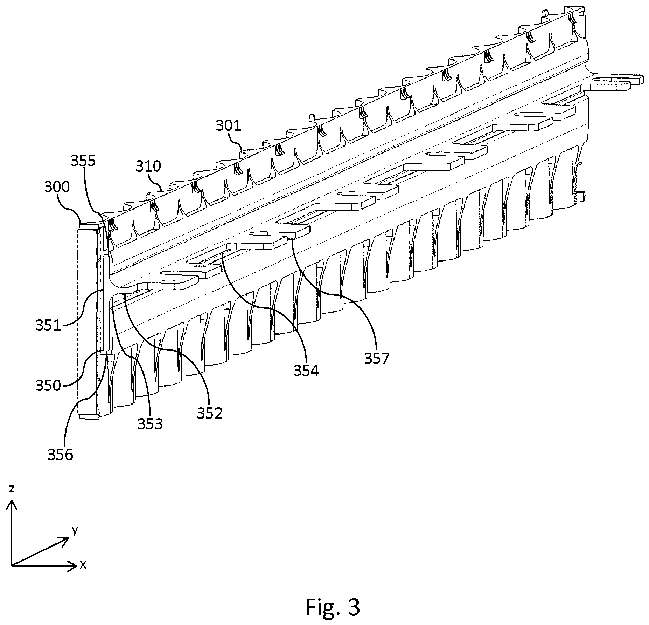

Figure 3 includes a schematic illustration of a side part 300 which may, as in the present example embodiment, be the side part 120. The side part 300 is arranged to secure to a cell module similarto the example cell module 200 in Figure 2, without the cooling element 201, but with at least a larger number of rows of cells in the y-direction. The side part 300 has a first side 301 as the first side 121 of the side part 120. As shown, the first side 301 comprises plurality of indentations 310 which may, as in the present example embodiment, be shaped to receive each of the plurality of cells of the cell module 110 along the first side 111 of the cell module 110. Thus, the exterior of each of the plurality of cells is attached to a respective indentation of the plurality of indentations 310 along the first side 301 of the side part 300. The plurality of indentations 310 may instead receive portions of the cooling element 201, where provided, which are respectively attached to each of the plurality of cells of the cell module 110 along the first side 111 of the cell module 110. However, the provision of the plurality of indentations 310 is optional, and the first side 301 of the side part 300 may take other shapes (i.e., as appropriate for the shape of each of the plurality of cells) or simply be flat (i.e., whereby a cooling element such as the cooling element 201 and/or a potting medium such as the potting medium 220 substantially flatten the first side 111 of the cell module 110).

The side part 300 may, as in the present example embodiment, be secured to the first side 111 of the cell module 110 by an adhesive. However, the side part 300 may alternatively be secured to the first side 111 of the cell module 110 by fasteners instead of, or in addition to, the adhesive or by attachment to an upper cover and/or a lower cover of the cell module 110 (i.e., with at least one snap fit).

The fixation part 130 is secured to and extending from the side part 120. That is, the fixation part 130 is secured to (or attached to) and extending from the second side 122 of the side part 120, as described in more detail below. The fixation part 130 is thus separated from the cell module 110 by the side part 120 such that, as the side part 120 is made of the first material which is electrically non-conductive, the fixation part 130 is electrically isolated from the cell module 120 (i.e., from the plurality of cells therein or any interconnectors). The fixation part 130 is for fixing the battery assembly 100 to a battery mount (i.e., with fasteners), as described in more detail in the second example embodiment.

The fixation part 130 is made of a second material which is stiffer (and/or stronger) than the first material (i.e., the second material has a Young's modulus and/or a yield strength that is greater than that of the first material). That is, the fixation part 130 consists of the second material. This material may be electrically conductive without affecting the electrical connections between the plurality of cells in the cell module 110 due to the side part 120 electrically isolating the fixation part 130 from the cell module 110, as described above. Accordingly, the second material may, as in the present example embodiment, be a metal, such as aluminium, steel or titanium, which may have a Young's modulus of more than 68 GPa (or in the range of 68 GPa to 210 GPa). However, the second material may more generally be any material stiffer (and/or stronger) than the first material (i.e., with a stiffness more than five times, or ten times, that of the first material and/ora strength more than twice of that of the first material), such as a polymer or a ceramic that is stiffer (and/or stronger) than the first material.

The fixation part 130 may, as in present example embodiment, comprise a base portion of a first length and a protruding portion which extends from a face of the base portion along the first length. The first length may, as in the present example embodiment, be the length of the second side 122 of the side part 120 in the y-direction, although it may be longer or shorter as desired. The base portion is secured to the side part 120 (i.e., a face of the base portion, opposing the face of the base portion from which the protruding portion extends, is attached to the side part 120) and the protruding portion extends from the face of the base portion away from side part 120. The protruding portion is for fixing the battery assembly 100 to a battery mount (i.e., with fasteners), as described in more detail in the second example embodiment. The base portion may have a height (perpendicular to the first length, i.e., in the z-direction) greater than half the height of the side part 120, or even up to the height of the side part 120. Increasing the height of the base portion increases the contact surface between the base portion and the side part 120 to provide a stronger fixation. The base portion comprises a first side extending along the first length and a second opposing side extending along the first length. However, the fixation part 130 may take other forms, as later described, and may more generally be any part secured to the side part 120 and arranged to fix the battery assembly 100 to a battery mount.

Figure 3 also includes a schematic illustration of a fixation part 350 which may, as in the present example embodiment, be the fixation part 130. The fixation part 350 has a first base member 351 as the base portion and a first protruding part 352 as the protruding portion. As shown, the first base member 351 and the first protruding part 352 form a T-shape by the first protruding part 352 extending from the face of the first base member 351 along the first length between the first side 355 of the first base member 351 and the second opposing side 356 of the first base member 351. The T-shape of the fixation part 350 both maximises the contact surface between the fixation part 350 and the side part 300, increasing the strength of attachment between these elements, and provides a strong resistance to bending moments about the z-axis and x-axis whilst minimising the weight of the fixation part 350 (which is often a heavier element than the side part 300).

The first base member 351 and the first protruding part 352 are parts of a single piece of material (i.e., a T-bar) which may be formed by extrusion or by stamping, for example. However, they may instead be separate components that are attached together by way of an adhesive, welding or otherwise. The fixation part 350 further comprises curved portions 353 on either edge on the first length between the first base member 351 and the first protruding part 352 to strengthen the join between these elements. However, these curved portions 353 are optional and may be omitted.

The protruding portion 352 may, as in the present example embodiment, comprise a plurality of holes 357 for fixing the battery assembly 100 to a battery mount and may comprise a plurality of indentations 354 whereby each indentation is between a respective adjacent pair of holes of the plurality of holes 357. This saves material and so reduces the weight of the fixation part 350. However, the plurality of indentations 354 may be omitted and the protruding portion may be secured to the battery mount without need for the plurality of holes 357 (i.e., where an adhesive is used).

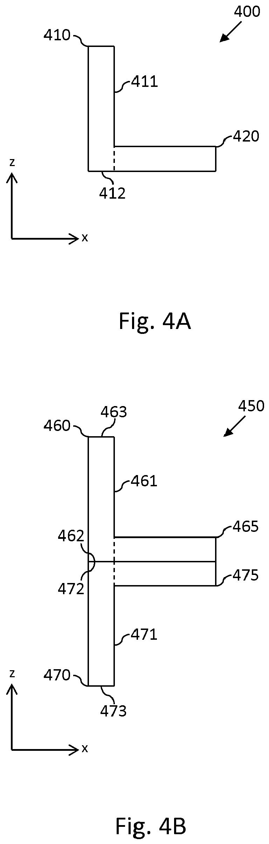

Figure 4A is a schematic illustration of a cross-sectional view of an alternative fixation part 400 which may instead be the fixation part 130. The fixation part 400 has a first base member 410 (of the first length) with a first side 412 and a face 411 as the base portion with the first side and the face, and a first protruding part 420 as the protruding portion. The first base member 410 and the first protruding part 420 form an L-shape by the first protruding part 420 extending from the face 411 of the first base member 410 at the first side 412 of the first base member 410. The fixation part 400 extends along the length of the second side 122 of the side part 120 in the y-direction in a similar mannerto the fixation part 350 in Figure 3. The dashed line is present solely to illustrate the bound between the first base member 410 and the first protruding part 420. The first base member 410 and the first protruding part 420 are parts of a single piece of material (i.e., an angle bar) which may be formed by extrusion or by stamping, for example. However, they may instead be separate components that are attached together by way of an adhesive, welding or otherwise. The fixation part 400 may further comprise a curved portion at the edge along the first length between the first base member 410 and the first protruding part 420 in a similar manner to the fixation part 350 in Figure 3.

Figure 4B shows a cross-sectional view of an alternative fixation part 450 which may instead be the fixation part 130. The base portion of the fixation part 450 comprises a first base member460 of the first length and a second base member470 of a second length (which may be the same as the first length). The protruding portion of the fixation part 450 comprises a first protruding part 465 which extends from a face 461 of the first base member 460 and a second protruding part 475 which extends from a face 471 of the second base member 470. That is, the protruding portion, comprising the first protruding part 465 and the second protruding part 475, extends from a face of the base portion which comprises the face 461 of the first base member 460 and the face 471 of the second base member 470. The first base member 460 and the second base member 470 are secured to the side part 120 and the first protruding part 465 and the second protruding part 475 extend from the face of their respective base member away from the side part 120.

The first base member 460 and the first protruding part 465 form an L-shape by the first protruding part 465 extending from the face 461 of the first base member 460 at a first side 462 of the first base member 460 which extends along the first length. The second base member 470 and the second protruding part 475 form an L-shape by the second protruding part 475 extending from the face 471 of the second base member 470 at a first side 472 of the second base member 470 which extends along the second length. The L-shape formed by the first base member 460 and the first protruding part 465 and the L-shape formed by the second base member 470 and the second protruding part 475 are arranged to form a T-shape. The first side of the base portion is a second side 463 of the first base member which opposes the first side 462 of the first base member 460 and the second opposing side of the base portion is a second side 473 of the second base member 470 which opposes the first side 472 of the second base member 470. The fixation part 450 extends along the length of the first side 122 of the side part 120 in the y-direction in a similar manner to the fixation part 350 in Figure 3. The first protruding part 465 and the second protruding part 475 are for fixing the battery assembly 100 to a battery mount (i.e., with fasteners), as described in more detail in the second example embodiment.

The first base member 460 and the first protruding part 465, and the second base member 470 and the second protruding part 475, are respectively parts of a single piece of material (i.e., an angle bar) which may be formed by extrusion or by stamping, for example. However, they may respectively instead be separate components that are attached together by way of an adhesive, welding or otherwise. The fixation part 450 may further comprise a curved portion at the edge along the first length between first base member 460 and the first protruding part 465, and a curved portion at the edge along the second length between the second base member 470 and the second protruding part 475, in a similar manner to the fixation part 350 in Figure 3. The dashed line is present solely to illustrate the bound between the first base member 460 and the first protruding part 465, and the second base member 470 and the second protruding part 475.

The alternative fixation part 400 and the alternative fixation part 450 provide both a large contact surface with the side part 300, increasing the strength of attachment between these elements, and a strong resistance to bending moments about the z-axis and x-axis, whilst reducing the weight of the fixation parts 400, 450, in a similar manner to the fixation part 350.

The fixation part 130 may, as in the present example embodiment, be secured to the side part 120 by overmoulding the side part 120 around at least a part of the base portion of the fixation member 130. This is shown in Figure 3 with the fixation part 350, wherein the side part 300 has been overmoulded over the face of the base member 351 of fixation part 350. Overmoulding may similarly be used to secure the fixation part 400 and the fixation part 450 in Figure 4A and Figure 4B, respectively, to the side part 120. Alternatively, or additionally, the fixation part 130 may be secured to the side part 120 by bonding the side part 120 to at least a part of the base portion of the fixation part 130 with an adhesive, by at least one dovetail joint and/or by heat staking of the side part 120 to the base portion of the fixation part 130. Combinations of the aforementioned methods for securing the fixation part 130 to the side part 120 may include, by way of example, the use of at least one dovetail joint in combination with overmoulding or the use of overmoulding and an adhesive.

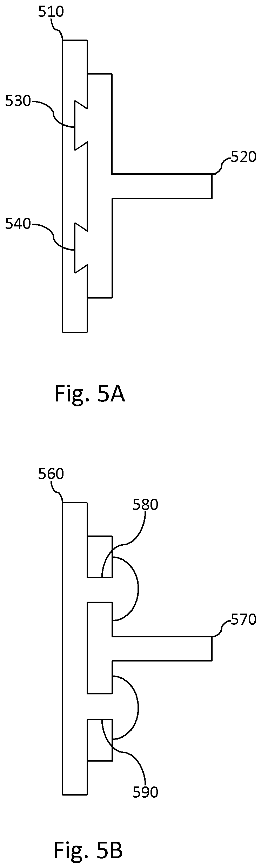

Figure 5A is a schematic illustration of a cross-sectional view of a side part 510 and a fixation part 520 (which has a T-shape similar to the fixation part 350) to illustrate how a side part and a fixation part may be secured by a dove tail joint. The fixation part 520 is secured to the side part 510 by a first dovetail joint 530 and a second dovetail joint 540. The first dovetail joint 530 and the second dovetail joint 540 are respectively formed between the second side 511 of the side part 510 and a face of the base portion of the fixation part 520 adjacent to and facing the second side 511 of the side part 510 from a respective indentation in the side part 510 and a respective protrusion from the base portion of the fixation part 510 (or alternatively vice versa). However, any number of dovetail joints may be formed between the fixation part 510 and the fixation part 520 (i.e., the second dovetail joint 540 may be omitted).

Figure 5B is a schematic illustration of a cross-sectional view of a side part 560 and a fixation part 570 (which has a T-shape similar to the fixation part 350) to illustrate how a side part and a fixation part may be secured by heat staking. The fixation part 570 is secured to the side part 560 by heat staking of the side part 560 to the base portion of the fixation part 570. The heat staking occurs through holes 580 and 590 in the fixation part 570, although heat staking may occur through any number of holes in the base portion of the fixation part 570.

The base portion of the fixation part 130 may, as in the present embodiment, comprise a plurality of holes which, during the overmoulding, are filled by the side part 120. This is performed within Figure 3 however the plurality of holes are hidden from view by the side part 300. Alternatively, or additionally, the base portion of the fixation part 350 may comprise a plurality of indentations in the first side of the base portion of the fixation part 130 and/or the second side of the base portion of the fixation part 130 which, during the overmoulding, are filled by the side part 120. The use of the plurality of holes and/or indentations strengths the join between the side part 120 and the fixation part 130 formed by the overmoulding, however their inclusion is entirely optional.

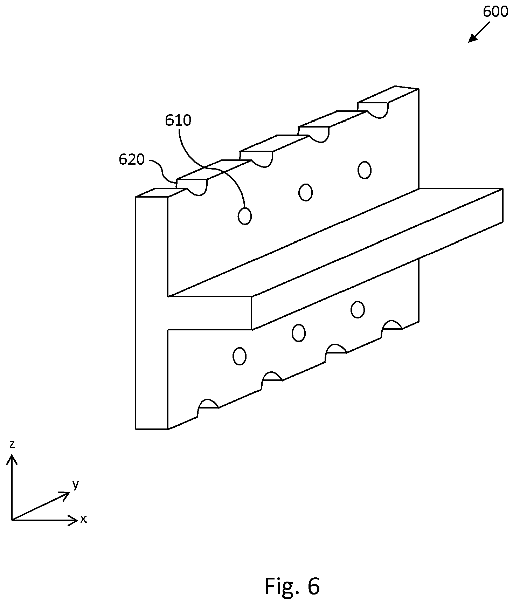

Figure 6 is a schematic illustration of an example fixation part 600 with a plurality of holes 610 and a plurality of indentations 620 on the first side and the second side of the base portion, as described above. The plurality of holes 610 and the plurality of indentations 620 are shown as circular, however they may take any geometry, such as being long holes or v-notches, for example.

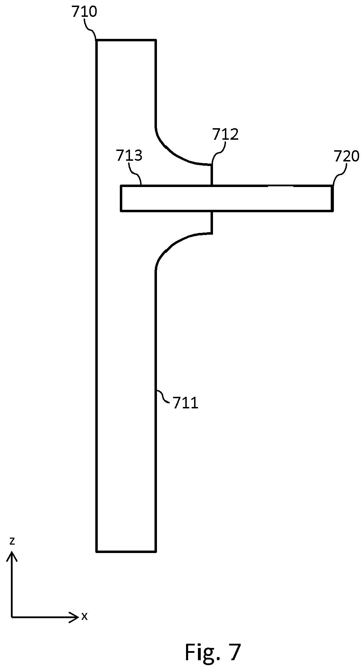

As an alternative to the example embodiment described above with reference to Figure 3, the side part 120 and the fixation part 130 may take the alternative form which will now be described with reference to Figure 7, which is a schematic illustration of a cross-sectional view of a side part 710 and a fixation member 720 which may, according to an alternative implementation, be the side part 120 and the fixation part 130. The fixation member 720 has a first length (in the y-direction) and the side part 710 comprises an indentation 713 arranged to receive a portion of the fixation member 720 along the first length of the fixation member 720. The first length may, as in the alternative implementation, be the length of the second side 122 of the side part 120 (in the y-direction), although it may be longer or shorter as desired.

The side part 710 may, as in the alternative implementation, comprise a base 711 and a raised portion 712 extending from the base 711. The indentation 713 is within the raised portion 712. However, the provision of the raised portion 712 is optional and may be omitted.

The fixation member 720 is secured within the indentation 712 of the side part 710. The fixation member 720 may, as in the alternative implementation, be secured to the side part 710 by overmoulding the side part 710 around at least a part of the fixation member 720.

However, the fixation member 720 may alternatively, or additionally, be secured to the side part 710 by an adhesive, by at least one dovetail joint or by heat staking of the side part 710 to the fixation member 720. The fixing member 720 is for fixing the battery assembly 100 to a battery mount (i.e., with fasteners), as described in more detail in the second example embodiment.

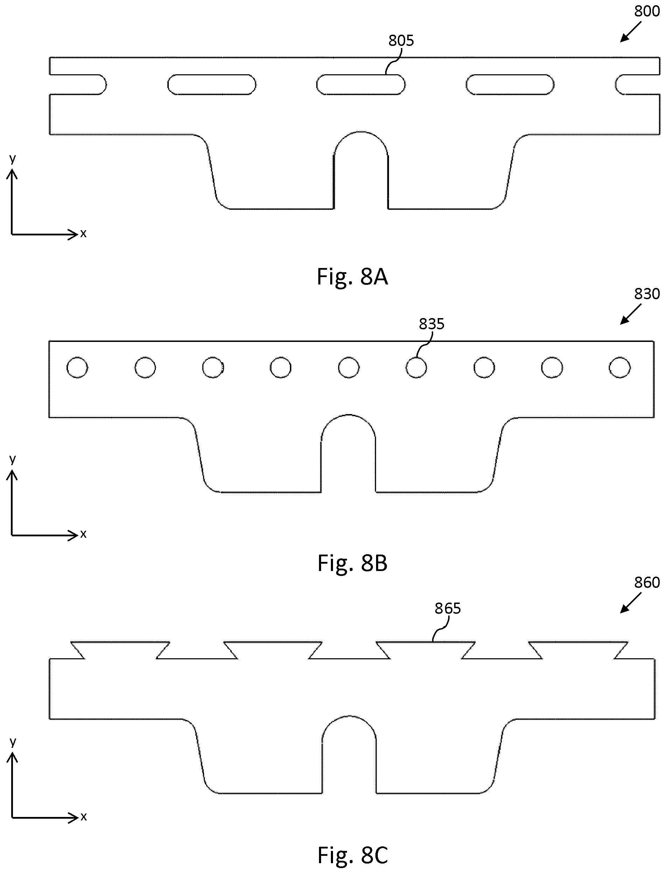

Figure 8A is a schematic illustration of a fixation member 800 which may, as in the alternative implementation, be the fixation member 720. The fixation member 800 comprises a plurality of holes 805. The side part 710 fills the plurality of holes 805 (due to the overmoulding). The plurality of holes 805 are shown as a plurality of (rounded) long holes. However, they may be omitted or take other forms such as is shown in Figure 8B by the plurality of round holes 835 in the fixation member 830.

Figure 8C is a schematic illustration of a fixation member 860 which may alternatively be the fixation member 720. The fixation member 860 is arranged to form a plurality of dove tail joints with the side part 710. For example, the plurality of protrusions 865 may form the dovetail joints when the side part 710 is overmoulded around them.

The fixation members 800, 830 and 860 may be formed from the first material (i.e., a flat bar of the first material) by a manufacturing process such as laser cutting, water jet cutting, stamping, extrusion or milling, for example. These fixation members are simpler and quicker to produce than the fixation members described in the first example embodiment (i.e., fixation part 355 or the alternatives in Figures 4A and 4B). However, the raised portion 712 must extend further from the base 711 to achieve a given stiffness (and/or strength) against forces in the vertical direction (z-direction) as compared to the radius of the curved portions 353 of the fixation part 355 due to the raised portion 712 being made of the first material, which is thus less volume efficient than the arrangement of fixation part 355. In addition, the use of laser cutting allows a high degree of accuracy to be obtained whilst reducing the manufacturing time of these parts.

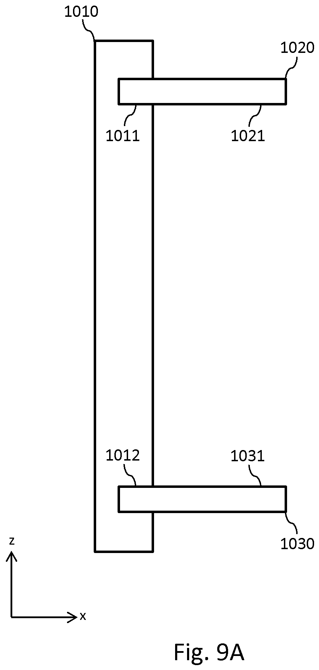

As a further alternative to the example embodiment described above with reference to Figure 3, the side part 120 and the fixation part 130 may take the alternative form which will now be described with reference to Figure 9A, which is a schematic illustration of a cross-sectional view of a side part 1010 and a fixation part 1020, 1030 which may, according to a second alternative implementation, be the side part 120 and the fixation part 130. The fixation part 1020, 1030 comprises a first fixation member 1020, of a first length, which extends from the side part 1010 along the first length, and a second fixation member 1030, of a second length, which extends from the side part 1010 along the second length. The first length may, as in the second alternative implementation, be the length of the second side 122 of the side part 120 (in the y-direction), although it may be longer or shorter as desired. Further, the second length may, as in the second alternative implementation, be the same as the first length, although it may be longer or shorter as desired.

The first fixation member 1020 comprises a first face 1021 and the second fixation member 1030 comprises a first face 1031 which faces the first face 1021 of the first fixation member 1020. The first face 1021 of the first fixation member 1020 and the first face 1031 of the second fixation member 1030 each share a respective edge with the side part 1010 along their respective first, or second, length. The side part 1010 may, as in the second alternative implementation, comprise a first indentation 1011 and a second indentation 1012. The first indentation 1011 is arranged to receive a portion of the fixation member 1020 along the first length of the first fixation member 1020 and the second indentation 1012 is arranged to receive a portion of the second fixation member 1030 along the second length of the fixation member 1030. The fixation members are secured within their respective indentations of the side part 1010 in the manner described in the alternative embodiment of Figure 7. However, the provision of the indentations in the side part 1010 is optional and either, or both, may be omitted. The fixation members are formed from the first material in the manner of the fixation parts described in the alternative embodiment of Figure 7, and may similarly comprise holes, long holes and/or dove tail joints for use in overmoulding.

The first fixation member 1020 and the second fixation member 1030 are spaced apart along the first length to form a gap between the first face 1021 of the first fixation member 1020, the first face 1031 of the second fixation member 1030 and the side part 1010. The gap may be for a battery mount to be secured to the first face 1021 of the first fixation member 1020 and the first face 1031 of the second fixation member 1030, as is described in more detail in the second example embodiment. By the battery mount securing to the two faces of the fixation part 1020, 1030 that are spaced apart in the z-direction, the stiffness of the first battery assembly 100 in the vertical direction (i.e., z-direction), and its rotational stiffness about the y-direction, is improved (for example, as compared to the alternative implementation of Figure 7).

While the fixation part 1020 in second alternative implementation has been described above as comprising a first fixation member 1020 and a second fixation member 1030, the fixation part 130 may more generally comprise a first fixation portion and a second fixation portion as the first fixation member 1020 and a second fixation member 1030, respectively.

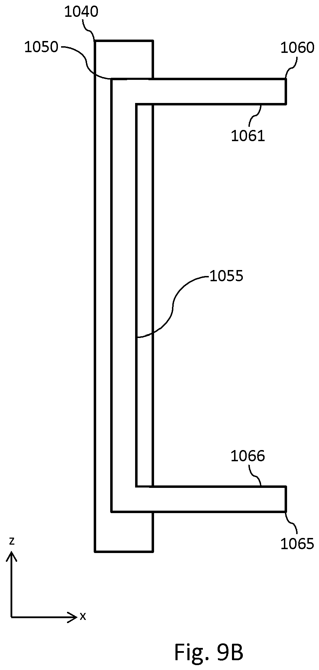

For example, Figure 9B is a schematic illustration of a cross-sectional view of a side part 1040 and a fixation part 1050 which may be the side part 120 and the fixation part 130 in the second alternative implementation of the first example embodiment. The fixation part 1050 comprises a first fixation portion 1060, a second fixation portion 1065 and a connecting portion 1055. The first fixation portion 1060 and the second fixation portion 1065 have the same features as the first fixation member 1020 and a second fixation member 1030 in Figure 9A, other than in being connected by the connecting portion 1055. In other words, the first fixation portion 1060 and the second fixation portion 1065 extend from the side part 1040, respectively comprise first faces 1061 and 1066 which face each other and are spaced along their lengths to form the gap, in the manners described above with reference to the first fixation member 1020 and a second fixation member 1030 in Figure 9A. As shown in Figure 9B, the connecting portion 1055 of the fixation part 1050 sits within the side part 1040 which may be achieved by overmoulding the side part 1040 around the fixation part 1050, thus securing the fixation part 1050 to the side part 1040. However, the connecting portion 1055 may alternatively, or additionally, be secured to the side part 1040 in other ways, such as with an adhesive or with fasteners.

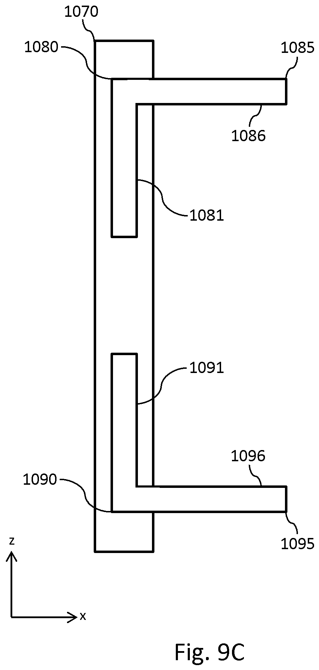

A further example of the generalised first and second fixation portions is shown in Figure 9C. This is a schematic illustration of a cross-sectional view of a side part 1070 and a fixation part 1080, 1090 which may be the side part 120 and the fixation part 130 of the first example embodiment. The fixation part 1080, 1090 comprises a first fixation member 1080 and a second fixation member 1090. The first fixation member 1080 comprises a first base portion 1081 and a first fixation portion 1085, as the aforementioned first fixation portion, with a first face 1086 and the second fixation member 1090 comprises a first base portion 1091 and a first fixation portion 1095, as the aforementioned second fixation portion, with a first face 1096.

The first fixation portion 1085 of the first fixation member 1080 and the first fixation portion 1095 of the second fixation member 1090 have the same features as the first fixation member 1020 and the second fixation member 1030 in Figure 9A, other than in also extending from their respective base portions 1081, 1091. In other words, the first fixation portion 1085 of the first fixation member 1080 and the first fixation portion 1095 of the second fixation member 1090 extend from the side part 1070, respectively comprise first faces 1086 and 1096 which face each other and are spaced along their lengths to form the gap, in the manners described above with reference to the first fixation member 1020 and the second fixation member 1030 in Figure 9A. As shown in Figure 9C, the base portions 1081, 1091 of the fixation part 1080, 1090 sit within the side part 1070 which may be achieved by overmoulding the side part 1070 around the fixation part 1080, 1090, thus securing the fixation part 1080, 1090 to the side part 1070. However, the base portions 1081, 1091 of the fixation parts 1080, 1090 may alternatively, or additionally, be secured to the side part 1070 in other ways, such as with an adhesive or with fasteners.

While the present example embodiment has described a side part 120 and a fixation part 130 on the first side 111 of the cell module 110, the battery assembly 100 may further comprise a second side part and a second fixation part on the second side 112 of the cell module 110 in the same manner as the side part 120 and the fixation part 130. The battery assembly 110 can thus be fixed on either side to a battery mount with the fixation parts, increasing the strength of fixation between these elements. In particular, where the battery assembly 110 is subjected to horizontal forces (in the x-direction), the provision of the second fixation part increases the stiffness of the battery assembly 110 in this dimension as the respective fixation parts resist compressive forces in either direction (rather than the lower stiffness side part being under extension when subject to forces in one direction).

### [Second Embodiment]

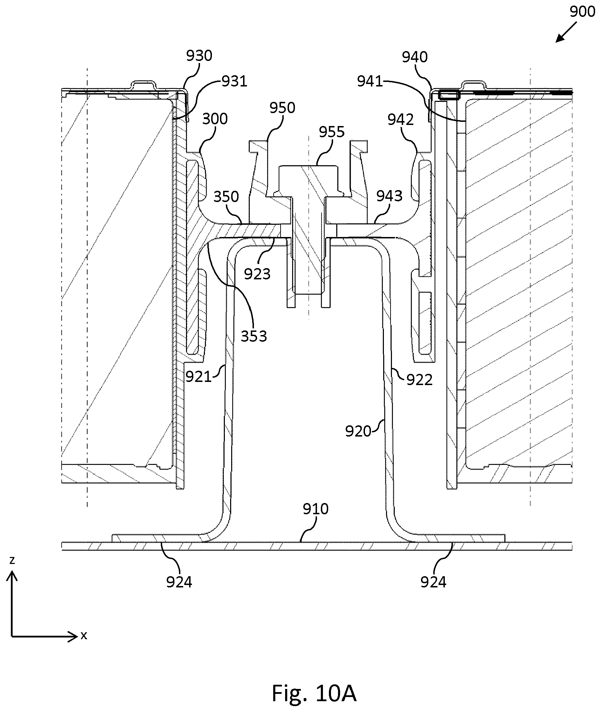

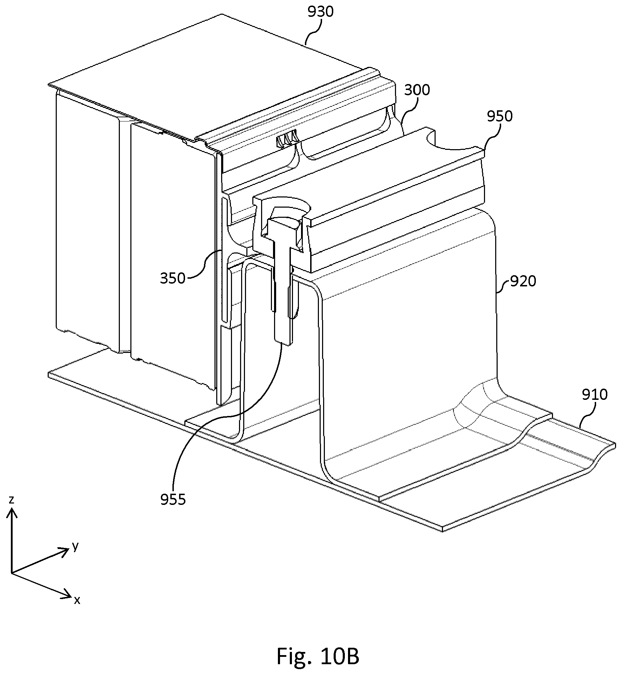

Figures 10A and 10B are schematic illustrations of a partial cross-sectional view and a partial isometric view, respectively, of a mounted battery system 900 according to a second example embodiment. The mounted battery system 900 comprises a battery mount. The mounted battery system 900 further comprises a first battery assembly 930 and, optionally, a second battery assembly 940 (shown in Figure 10A for illustrative purposes but not in Figure 10B). Figure 10A is truncated in the x-direction such that the full extent of the first battery assembly 930, the second battery assembly 940 and the battery mount are not shown. Figure 10B is truncated in the x-direction and the y-direction such that the full extent of the battery assembly 930 and the battery mount are not shown.

The battery mount comprises a mount base 910 and a first mount portion 920 extending from the mount base 910 (in the z-direction). The first mount portion 920 may, as in the present example embodiment, be a distinct part to the mount base 910 and may be connected to the mount base 910 along a lower surface 924 of the first mount portion 920 by way of an adhesive, welding, fasteners or otherwise. Alternatively, the first mount portion 920 may be a portion of the mount base 910 and may form a single piece of material with the mount base 910 (i.e., the first mount portion 920 and the mount base 910 are parts of a common piece of material, such as by being produced by a manufacturing process like injection moulding).

The mount base 910 may, as in the present example embodiment, be a sheet of metal (shown lying in the x-y plane of Figures 10A and 10B). However, it may instead be made of other materials, such as polymers or ceramics, or be a portion of the base of an electric vehicle.

The first mount portion 920 may, as in the present example embodiment, be a hollow (cross) beam with a trapezoidal cross-sectional and an axial direction parallel to the first side 931 of the cell module of the first battery assembly 930 in the y-direction. The first mount portion 920 may have a first side 921 adjacent to and facing the first side 931 of the cell module of the first battery assembly 930 and a second side 922 opposing the first side 921 and both adjacent to and facing a first side 941 of the cell module of the second battery assembly 940. As shown in Figure 10, the first mount portion 920 forms the hollow beam from a deformed sheet of metal which is secured to the mount base 910. The use of a hollow beam maximises the rigidity of the first mount portion 920 whilst minimising the weight of the part. However, the first mount portion 920 may instead be a beam, or other structural element, with a cross-section of another shape, such as a rectangle or semi-circle, and may be curved and/or solid rather than hollow. Accordingly, in some cases, the first side 921 and the second side 922 of the first mount portion 920 may be a first portion and a second portion of the first mount portion 920 facing their respective sides of the cell modules of the respective battery assemblies. The first mount portion 920 is made of the same material as the mount base 910, although it may be made of a differing material.

The first battery assembly 930 is the same as the battery assembly described above in the first example embodiment - the description of which will not be repeated here. For example, the side part 300 and the fixation part 350 are those from Figure 3, as denoted by use of the same reference numeral, but may instead be the side part 710 and the fixation part 720 (as shown in Figure 7) of the alternative implementation of the first example embodiment. As shown in Figures 10A and 10B, the fixation part 350 of the first battery assembly 930 is secured to (an upper surface 923 of) the first mount portion 920 of the battery mount. Where the first battery assembly 930 comprises the side part 1010 and the fixation part 1020, 1030 from the second alternative implementation of the first example embodiment, the first mount portion 920 takes an alternative form, as is later described.

The first battery assembly 930 comprises the curved portions 353, as described in the first example embodiment. As the fixation part 350 is made of the second, stiffer material, (i.e., a metal) the radius of the curved portions 353 required for a given stiffness (and/or strength) as compared to using the first material (i.e., a polymer) is reduced, which allows the width (in the x-direction) of the first mount portion 920 to be reduced for an equivalent contact area between the first mount portion 920 and the fixation part 350. Thus, weight can be saved and the size of the mounted battery system 900 can be reduced.

The mounted battery system 900 may, as in the present example embodiment, comprise a plurality of fasteners 955 which secure the fixation part 350 of the first battery assembly 930 to the first mount portion 920 of the battery mount. More specifically, as shown in Figures 10A and 10B, the mounted battery system 900 further comprises a load-distribution member 950 arranged between the plurality of fasteners 955 and the fixation part 350, thus the plurality of fasteners 955 exert force securing the fixation part 350 to the first mount portion 920 of the battery mount through the load-distribution member 950. However, the load-distribution member 950 is optional and may be omitted such that the plurality of fasteners 955 directly secure the fixation part 350 to the first mount portion 920. Further, additionally or alternatively, the fixation part 350 may secured to the first mount portion 920 by other means, such as with an adhesive or by welding.

The plurality of fasteners 955 may, as in the present example embodiment, be bolts which are secured within a correspondingly threaded portion in the upper surface 923 of the first mount portion 920. However, they may alternatively be other types of fasteners, such as rivets or clips.

The first battery assembly 930 may, as in the present example embodiment, be secured to the first mount portion 920 such that a gap is formed between the battery assembly 930 and the mount base 910. The mounted battery system 900 may further comprise a supporting element (i.e., a foam cuboid) within the gap in contact with the mount base 910 and the first battery assembly 930, and/or a protrusion from the mount base 910 (i.e., a bend in the metal sheet forming a ridge) which contacts the first battery assembly 930, to at least partially support the weight of the first battery assembly 930. Where the first battery assembly 930 comprises the second side part and the second fixation part on the second side of its cell module as described in the first example embodiment, the mounted battery system 900 may further comprise a second mount portion extending from the mount base 910. This second mount portion is the same as the first mount portion 920 other than in having a second side which is adjacent to and facing the second side of the cell module of the first battery assembly 930. The first battery assembly 930 may thus be secured to the first mount portion 920 and the second mount portion (in a similar manner to the first mount portion 920) such that the gap is formed between the first battery assembly 930 and the mount base 910. That is, the first battery assembly 930 may be suspended between the first mount portion 920 and the second mount portion such that there is no contact between the first battery assembly 930 and the mount base 910.

The second battery assembly 940 is also the same as the battery assembly described in the first example embodiment, other than the side part 942 of the second battery assembly 940 being secured to the opposing second side 941 of the corresponding cell module. For example, the side part 942 and the fixation part 943 are the side part 300 and the fixation part 350 from Figure 3 as mirrored to be instead attached to the opposing second side 941. Note that the gap within the side part 942 in Figure 10A is present due to one of the plurality of indentations in the side part 942 being at a different offset in the y-direction to that of the side part 300 of the first battery assembly 930. The second battery assembly 940 is secured to the first mount portion 920 in a similar manner to the first battery assembly 930. That is, the fixation member 350 of the first battery assembly 930 comprises the first plurality of indentations, as described with reference to Figure 3, and the fixation member 943 of the second battery assembly 940 comprises a similar second plurality of indentations. The first plurality of indentations are each arranged to fit therein a respective portion of the fixation member 943 of the second battery assembly 940 adjacent to each indentation of the second plurality of indentations. In other words, the first plurality of indentations form a corresponding first plurality of protrusions of the fixation member 350 of the first battery assembly 930 which interlock (or interface) with a second plurality of protrusions of the fixation member 943 of the second battery assembly 940 formed by the second plurality of indentations. The fixation members of the first battery assembly 930 and the second battery assembly 940 can thus be secured to the first mount portion 920 by fasteners arranged along a line in the axial direction of the first mount portion 920, as shown in Figure 10A, which allows the width (in the x-direction) of the first mount portion 920 to be minimised to save weight in, and reduce the size of, the mounted battery system 900. However, the first (and second) plurality of indentations are optional and may be omitted whilst keeping the width of the first mount portion 920 the same by stacking the respective fixation parts on top of one another in the z-direction, although this increases the weight of the respective fixation parts. Alternatively, the first (and second) plurality of indentations may be omitted and the width of the first mount portion 920 may be extended accommodate two lines in the axial direction of the first mount portion 920 for fasteners to secure the respective fixation parts to the first mount portion 920.

The mounted battery system 900 may further comprise a third mount portion which is the same as the second mount portion other than being arranged to secure to the second battery assembly 940.

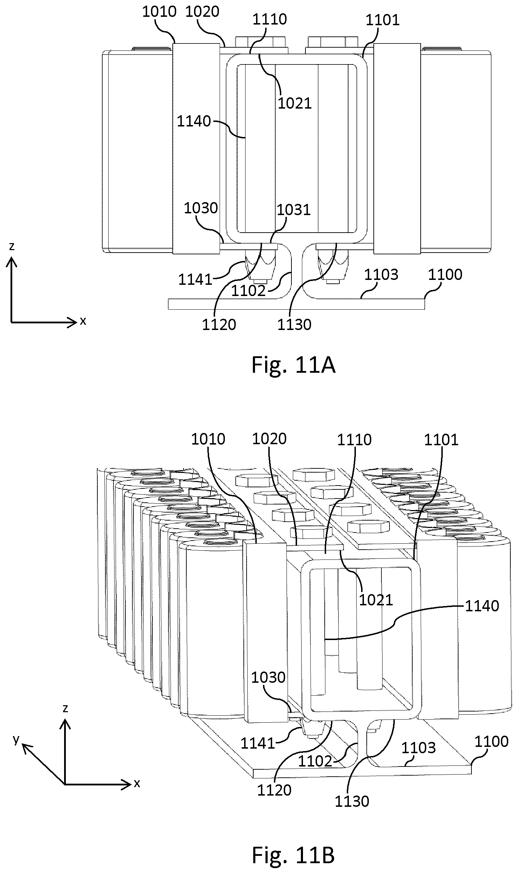

Where the first battery assembly 930 comprises the side part 1010 and the fixation part 1020, 1030, the first mount portion 920 may take the alternative form of the first mount portion 1100 which will now be shown and described with reference to Figures 11A and 11B, which are schematic illustrations of a partial cross-sectional view and a partial angle view, respectively, of the aforementioned first battery assembly, a second corresponding battery assembly and the first mount portion 1100. Figure 11A is truncated in the x-direction such that the full extent of the first battery assembly 930, the second battery assembly 940 and the first mount portion 1100 are not shown. Figure 11B is truncated in the x-direction and the y-direction such that the full extent of the battery assembly 930 and the first mount portion 1100 are not shown.

The first mount portion 1100 has a first face 1110 arranged to face the first face 1021 of the first fixation member 1020 and has a second face 1120 arranged to face the first face 1031 of the second fixation member 1030. That is, the first mount portion 1100 is arranged to fit, at least partially, within the gap between the first face 1021 of the first fixation member 1020, the first face 1031 of the second fixation member 1030 and the side part 1010. The first mount portion 1100 may, as shown in Figures 11A and 11B, comprise a hollow beam 1101, with a cuboidal cross-section, which has an axial direction parallel to the first side 931 of the cell module of the first battery assembly 930 in the y-direction. The use of a hollow beam maximises the rigidity of the first mount portion 1100 whilst minimising the weight of the part. However, the first mount portion 1100 may instead be a beam, or other structural element, with a cross-section of another shape, such as a rectangle or semi-circle, and may be curved and/or solid rather than hollow. Accordingly, in some cases, the first face 1110 and the second face 1120 of the first mount portion 1100 may be a first portion and a second portion of the first mount portion 1100. The first mount portion 1100 is made of the same material as the mount base 910, although it may be made of a differing material.

The first mount portion 1100 further comprises a web 1102 running along the axial direction of the hollow beam 1101 and a base plate 1103, wherein the web 1102 secures the hollow beam 1101 to the base plate 1103. The base plate 1103 extends from and is secured to the mount base 910 (not shown in Figures 11A and 11B) in the manner described with reference to the lower surface 924 of the first mount portion 920 in Figures 10A and 10B. However, the base plate 1103 may be omitted and the first mount portion 1100 may be a portion of the mount base 910 (i.e., the first mount portion 1100 and the mount base 910 are parts of a single, common piece of material). In other words, the web 1102 directly secures the hollow beam 1101 to the mount base 910.

The first face 1021 of the first fixation member 1020 is secured to (or attached to) the first face 1110 of the first mount portion 1100 and the first face 1031 of the second fixation member 1030 is secured to (or attached to) the second face 1120 of the first mount portion 1100. This may be achieved, as shown in Figures 11A and 11B, by at least one bolt 1140 passing through respective holes in the first face 1021 of the first fixation member 1020, the first face 1110 of the first mount portion 1100, the first face 1031 of the second fixation member 1030 and the second face 1120 of the first mount portion 1100 which is tightened by a corresponding nut 1141 to clamp the first face 1021 of the first fixation member 1020 to the first face 1110 of the first mount portion 1100 and the first face 1031 of the second fixation member 1030 to the second face 1120 of the first mount portion 1100. However, the first fixation member 1020 and/or the second fixation member 1030 may additionally or alternatively be secured to the first mount portion 1100 by other means, such as with an adhesive or by welding, or by use of other fasteners, such as rivets or clips.

The first battery assembly 930 in Figures 11A and 11B is secured to the first mount portion 920 such that a gap is formed between the battery assembly 930 and the mount base 910, in the same manner as described in Figures 10A and 10B, and may comprise a similar supporting portion or a similar protrusion from the mount base 910.

The second corresponding battery assembly 940, which comprises a similar side part 1010 and fixation part 1020, 1030, is secured to the first mount portion 1100 in a similar manner to the first battery assembly 930, as shown. That is, the second battery assembly 940 has a first face of its first fixation member secured to and facing a third face (which in Figures 11A and 11B is the first face 1110) of the first mount portion 1100 and has a first face of its second fixation member secured to and facing a fourth face 1130 of the first mount portion 1100. The second mount portion and the third mount portion of the mounted battery system 900 would, where provided in the arrangement shown in Figures 11A and 11B, be the same as the first mount portion 1100.

While Figures 11A and 11B have been described with reference to the side part 1010 and the fixation part 1020, 1030 of the second alternative implementation of the first example embodiment, either the alternative side part 1040 and the fixation part 1050 or the alternative side part 1070 and the fixation part 1080, 1090 described in the second alternative implementation may be used instead. Thus, the first fixation member 1020 and the second fixation member 1030 described above with reference to Figures 11A and 11B may more generally be referred to as a first fixation portion of the fixation part and a second fixation portion of the fixation part.

While the present example embodiment has been described with reference to Figures 10A and 10B, and Figures 11A and 11B, with respect to a first battery assembly 930 and an optional second battery assembly 940, it may be extended to any number of battery assemblies. In such a case, the mount base 910 may be extended to include an additional mount portion extending from the mount base 910 for each additional battery assembly (i.e., N portions for N-1 battery assemblies in the x-direction), which may be secured to the previous and additional mount portion in the above-described manners with the respective fixation part of each battery assembly. However, the mount base 910 may also be extended to accommodate longer mount portions extending from the mount base 910 (i.e., in the y-direction) such that multiple battery assemblies can be bonded to the same pair of mount portions of the mount base 910. For example, a third battery assembly may be secured to the first mount portion 920 in the above-described manners (i.e., where the first mount portion 920 is extended in the y-direction to accommodate an additional battery assembly). Where a plurality of battery assemblies are employed, the mounted battery system 900 may further comprise series and/or parallel electrical connections between the battery assemblies (not shown).

The mounted battery system of any of the above-described embodiments may be for an electric vehicle (i.e., an electric car, train or boat) and thus the batteries assemblies therein may power, at least in part, a vehicle drive system. That is, an electric vehicle may comprise the mounted battery system of any of the above-described embodiments. In such cases, the mount base may be placed on the floor, or base, of the electric vehicle such that the mount base is nearest the ground beneath the vehicle and the battery assemblies are above the mount base (hence, the z-direction is aligned with the weight of the electric vehicle). However, the mount base may also be held above the floor, or base, of the electric vehicle such that the battery assemblies are between the floor, or base, of the electric vehicle and the mount base (i.e., they are suspended beneath the mount base and the z-direction in the figures described herein points towards the ground).

In the foregoing description, example aspects are described with reference to several example embodiments. Accordingly, the specification should be regarded as illustrative. Similarly, the figures illustrated in the drawings, which highlight the functionality and advantages of the example embodiments, are presented for example purposes only. The architecture of the example embodiments is sufficiently flexible and configurable, such that it may be utilized (and navigated) in ways other than those shown in the accompanying figures.

Further, the purpose of the Abstract is to enable the Patent Office and the public generally, and especially the scientists, engineers and practitioners in the art who are not familiar with patent or legal terms or phraseology, to determine quickly from a cursory inspection the nature and essence of the technical disclosure of the application. The Abstract is not intended to be limiting as to the scope of the example embodiments presented herein in any way. It is also to be understood that the procedures recited in the claims need not be performed in the order presented.

While this specification contains many specific embodiment details, these should not be construed as limitations on the scope of any inventions or of what may be claimed, but rather as descriptions of features specific to particular embodiments described herein. Certain features that are described in this specification in the context of separate embodiments can also be implemented in combination in a single embodiment. Conversely, various features that are described in the context of a single embodiment can also be implemented in multiple embodiments separately or in any suitable sub combination.

Moreover, although features may be described above as acting in certain combinations and even initially claimed as such, one or more features from a claimed combination can in some cases be excised from the combination, and the claimed combination may be directed to a sub-combination or variation of a sub-combination.

Having now described some illustrative embodiments, it is apparent that the foregoing is illustrative and not limiting, having been presented by way of example. In particular, although many of the examples presented herein involve specific combinations of apparatus, those elements may be combined in other ways to accomplish the same objectives. Acts, elements and features discussed only in connection with one embodiment are not intended to be excluded from a similar role in other embodiments or embodiments.

The apparatus described herein may be embodied in other specific forms without departing from the characteristics thereof. The foregoing embodiments are illustrative rather than limiting of the described systems and methods. Scope of the apparatus described herein is thus indicated by the appended claims, rather than the foregoing description, and changes that come within the meaning and range of equivalency of the claims are embraced therein.

Further, the disclosure comprises the following clauses, whereby it is noted that the scope of protection is provided by the claims and not by these clauses:
Clause 1. A battery assembly (100), comprising: a cell module (110, 200) which comprises a plurality of cells (210); a side part (120), of a first material, which is secured to a first side (111) of the cell module (110, 200), wherein the first material is electrically non-conductive; and a fixation part (130), of a second material, which is secured to and extending from the side part (120), wherein the second material is stiffer than the first material.
Clause 2. The battery assembly (100) of Clause 1, wherein the side part (120) comprises a first side (121) and a second opposing side (122), the first side (121) of the side part (120) is secured to the first side (111) of the cell module (110, 200) and the fixation part (130) is secured to and extending from the second side (122) of the side part (120).
Clause 3. The battery assembly (100) of Clause 2, wherein the first side (111) of the cell module (110, 200) is a first side of the plurality of cells (210) and the first side (121) of the side part (120) is secured to the first side (111) of the cell module (110) by the first side (121) of the side part (120) being attached to the first side of the plurality of cells (210).
Clause 4. The battery assembly (100) of Clause 2, wherein the cell module (110, 200) further comprises a cooling element (201) which comprises a first side (202) and a second opposing side (203), wherein the first side (202) of the cooling element (201) is attached to the plurality of cells (210), the first side (111) of the cell module (110, 200) is the second side (203) of the cooling element (201) and the first side (121) of the side part (120) is secured to the first side (111) of the cell module (110, 200) by the first side (121) of the side part (120) being attached to the second side (203) of the cooling element (201).
Clause 5. The battery assembly (100) of any preceding clause, wherein the fixation part (130, 350, 400, 450, 600) comprises a base portion of a first length and a protruding portion which extends from a face of the base portion along the first length, wherein the base portion is secured to the side part (120) and the protruding portion extends from the face of the base portion away from the side part (120) and wherein the base portion comprises a first side extending along the first length and a second opposing side extending along the first length.
Clause 6. The battery assembly (100) of Clause 5, wherein the base portion is a first base member (351) and the protruding portion is a first protruding part (352) and wherein the first base member (351) and the first protruding part (352) form a T-shape by the first protruding part (352) extending from the face of the first base member (351) along the first length between the first side (355) of the first base member (351) and the second opposing side (356) of the first base member (351).
Clause 7. The battery assembly (100) of Clause 5, wherein the base portion is a first base member (410) and the protruding portion is a first protruding part (420), and wherein the first base member (410) and the first protruding part (420) form an L-shape by the first protruding part (420) extending from the face (411) of the first base member (410) at the first side (412) of the first base member (410).
Clause 8. The battery assembly (100) of Clause 5, wherein the base portion comprises a first base member (460) of the first length and a second base member (470) of a second length and the protruding portion comprises a first protruding part (465) which extends from a face (461) of the first base member (460) and a second protruding part (475) which extends from a face (471) of the second base member (470), wherein the first base member (460) and the second base member (470) are secured to the side part (120) and the first protruding part (465) and the second protruding part (475) extend from their respective face of their respective base member away from the side part (120), wherein the first base member (460) and the first protruding part (465) form an L-shape by the first protruding part (465) extending from the face (461) of the first base member (460) at a first side (462) of the first base member (460) which extends along the first length, wherein the second base member (470) and the second protruding part (475) form an L-shape by the second protruding part (475) extending from the face (471) of the second base member (470) at a first side (472) of the second base member (470) which extends along the second length, wherein the L-shape formed by the first base member (460) and the first protruding part (465) and the L-shape formed by the second base member (470) and the second protruding part (475) are arranged to form a T-shape and wherein the first side of the base portion is a second side (463) of the first base member (460) which opposes the first side (262) of the first base member (460) and the second opposing side of the base portion is a second side (473) of the second base member (470) which opposes the first side (472) of the second base member (470).
Clause 9. The battery assembly (100) of any of Clauses 5 to 8, wherein the fixation part (130, 520) is secured to the side part (120, 510) by at least one dovetail joint (530, 540).
Clause 10. The battery assembly (100) of any of Clauses 5 to 8, wherein the fixation part (130) is secured to the side part (120) by bonding the side part (120) to at least a part of the base portion of the fixation part (130) with an adhesive.
Clause 11. The battery assembly (100) of any of Clauses 5 to 8, wherein the fixation part (130, 570) is secured to the side part (120, 560) by heat staking of the side part (120, 560) to the base portion of the fixation part (130, 570).
Clause 12. The battery assembly (100) of any of Clauses 5 to 9, wherein the fixation part (130, 350) is secured to the side part (120, 300) by overmoulding the side part (120, 300) around at least a part of the base portion of the fixation member (130, 350).
Clause 13. The battery assembly (100) of Clause 12, wherein the base portion of the fixation member (130, 600) comprises a plurality of holes (610) and wherein the side part (120) fills the plurality of holes (610).
Clause 14. The battery assembly (100) of Clause 12 or 13, wherein the base portion comprises a plurality of indentations (620) in the first side and/or the second side of the base portion of the fixation part (130, 600) and wherein the side part (120) fills the plurality of indentations (620).
Clause 15. The battery assembly (100) of any of Clauses 1 to 4, wherein the fixation part (130) is a fixation member (720) of a first length, wherein the side part (120) comprises an indentation (713) arranged to receive a portion of the fixation member (720) along the first length of the fixation member (720) and wherein the fixation member (720) is secured within the indentation (713) of the side part (120).
Clause 16. The battery assembly (100) of Clause 15, wherein the side part (710) comprises a base (711) and a raised portion (712) extending from the base (711) and wherein the indentation (713) is within the raised portion (712).
Clause 17. The battery assembly (100) of any of Clauses 1 to 4, wherein the fixation part (130) comprises a first fixation portion (1020), of a first length, which extends from the side part (1010) along the first length, and a second fixation portion (1030), of a second length, which extends from the side part (1010) along the second length, wherein the first fixation portion (1020) comprises a first face (1021) and the second fixation portion (1030) comprises a first face (1031) which faces the first face (1021) of the first fixation portion (1020), wherein the first fixation portion (1020) and the second fixation portion (1030) are spaced apart along the first length to form a gap between the first face (1021) of the first fixation portion (1020), the first face (1031) of the second fixation portion (1030) and the side part (1010) for a battery mount to be secured to the first face (1021) of the first fixation portion (1020) and the first face (1031) of the second fixation portion (1030).
Clause 18. The battery assembly (100) of any preceding clause, wherein the first material is a polymer.
Clause 19. The battery assembly (100) of any preceding clause, wherein the second material is a metal.
Clause 20. A mounted battery system (900), comprising: a battery mount which comprises a mount base (910) and a first mount portion (920) extending from the mount base (910); and a first battery assembly (930) according to any preceding claim; and wherein the fixation part (350) of the first battery assembly (930) is secured to the first mount portion (920) of the battery mount.
Clause 21. The mounted battery system (900) of Clause 20, wherein the mounted battery system (900) further comprises a plurality of fasteners (955), wherein the plurality of fasteners (955) secure the fixation part (350) of the first battery assembly (930) to the first mount portion (920) of the battery mount.
Clause 22. The mounted battery system (900) of Clause 21, wherein the mounted battery system (900) further comprises a load-distribution member (950) arranged between the plurality of fasteners (955) and the fixation part (350) and wherein the plurality of fasteners (955) exert force securing the fixation part (350) to the first mount portion (920) of the battery mount through the load-distribution member (950).
Clause 23. The mounted battery system (900) of any of Clauses 20 to 22 for an electric vehicle.

## Claims

1. A battery assembly (100), comprising:
a cell module (110, 200) which comprises a plurality of cells (210);
a side part (120), of a first material, which is secured to a first side (111) of the cell module (110, 200), wherein the first material is electrically non-conductive; and
a fixation part (130), of a second material, which is secured to and extending from the side part (120), wherein the second material is stiffer than the first material.

2. The battery assembly (100) of Claim 1, wherein the side part (120) comprises a first side (121) and a second opposing side (122), the first side (121) of the side part (120) is secured to the first side (111) of the cell module (110, 200) and the fixation part (130) is secured to and extending from the second side (122) of the side part (120).

3. The battery assembly (100) of Claim 2, wherein the first side (111) of the cell module (110, 200) is a first side of the plurality of cells (210) and the first side (121) of the side part (120) is secured to the first side (111) of the cell module (110) by the first side (121) of the side part (120) being attached to the first side of the plurality of cells (210).

4. The battery assembly (100) of Claim 2, wherein the cell module (110, 200) further comprises a cooling element (201) which comprises a first side (202) and a second opposing side (203), wherein the first side (202) of the cooling element (201) is attached to the plurality of cells (210), the first side (111) of the cell module (110, 200) is the second side (203) of the cooling element (201) and the first side (121) of the side part (120) is secured to the first side (111) of the cell module (110, 200) by the first side (121) of the side part (120) being attached to the second side (203) of the cooling element (201).

5. The battery assembly (100) of any preceding claim, wherein the fixation part (130, 350, 400, 450, 600) comprises a base portion of a first length and a protruding portion which extends from a face of the base portion along the first length, wherein the base portion is secured to the side part (120) and the protruding portion extends from the face of the base portion away from the side part (120) and wherein the base portion comprises a first side extending along the first length and a second opposing side extending along the first length.

6. The battery assembly (100) of Claim 5, wherein the base portion is a first base member (351) and the protruding portion is a first protruding part (352) and wherein the first base member (351) and the first protruding part (352) form a T-shape by the first protruding part (352) extending from the face of the first base member (351) along the first length between the first side (355) of the first base member (351) and the second opposing side (356) of the first base member (351).

7. The battery assembly (100) of Claim 5, wherein the base portion is a first base member (410) and the protruding portion is a first protruding part (420), and wherein the first base member (410) and the first protruding part (420) form an L-shape by the first protruding part (420) extending from the face (411) of the first base member (410) at the first side (412) of the first base member (410).

8. The battery assembly (100) of Claim 5, wherein the base portion comprises a first base member (460) of the first length and a second base member (470) of a second length and the protruding portion comprises a first protruding part (465) which extends from a face (461) of the first base member (460) and a second protruding part (475) which extends from a face (471) of the second base member (470), wherein the first base member (460) and the second base member (470) are secured to the side part (120) and the first protruding part (465) and the second protruding part (475) extend from their respective face of their respective base member away from the side part (120), wherein the first base member (460) and the first protruding part (465) form an L-shape by the first protruding part (465) extending from the face (461) of the first base member (460) at a first side (462) of the first base member (460) which extends along the first length, wherein the second base member (470) and the second protruding part (475) form an L-shape by the second protruding part (475) extending from the face (471) of the second base member (470) at a first side (472) of the second base member (470) which extends along the second length, wherein the L-shape formed by the first base member (460) and the first protruding part (465) and the L-shape formed by the second base member (470) and the second protruding part (475) are arranged to form a T-shape and wherein the first side of the base portion is a second side (463) of the first base member (460) which opposes the first side (262) of the first base member (460) and the second opposing side of the base portion is a second side (473) of the second base member (470) which opposes the first side (472) of the second base member (470).

9. The battery assembly (100) of any of Claims 5 to 8, wherein the fixation part (130, 520) is secured to the side part (120, 510) by:
at least one dovetail joint (530, 540);
bonding the side part (120) to at least a part of the base portion of the fixation part (130) with an adhesive;
heat staking of the side part (120, 560) to the base portion of the fixation part (130, 570); and/or
overmoulding the side part (120, 300) around at least a part of the base portion of the fixation member (130, 350).

10. The battery assembly (100) of Claim 9 whereby the fixation part (130, 520) is secured to the side part (120, 510) by overmoulding the side part (120, 300) around at least a part of the base portion of the fixation member (130, 350), wherein the base portion of the fixation member (130, 600) comprises a plurality of holes (610) and the side part (120) fills the plurality of holes (610), and/or
the base portion comprises a plurality of indentations (620) in the first side and/or the second side of the base portion of the fixation part (130, 600) and the side part (120) fills the plurality of indentations (620).

11. The battery assembly (100) of any of Claims 1 to 4, wherein the fixation part (130) is a fixation member (720) of a first length, wherein the side part (120) comprises an indentation (713) arranged to receive a portion of the fixation member (720) along the first length of the fixation member (720) and wherein the fixation member (720) is secured within the indentation (713) of the side part (120).

12. The battery assembly (100) of Claim 11, wherein the side part (710) comprises a base (711) and a raised portion (712) extending from the base (711) and wherein the indentation (713) is within the raised portion (712).

13. The battery assembly (100) of any of Claims 1 to 4, wherein the fixation part (130) comprises a first fixation portion (1020), of a first length, which extends from the side part (1010) along the first length, and a second fixation portion (1030), of a second length, which extends from the side part (1010) along the second length, wherein the first fixation portion (1020) comprises a first face (1021) and the second fixation portion (1030) comprises a first face (1031) which faces the first face (1021) of the first fixation portion (1020), wherein the first fixation portion (1020) and the second fixation portion (1030) are spaced apart along the first length to form a gap between the first face (1021) of the first fixation portion (1020), the first face (1031) of the second fixation portion (1030) and the side part (1010) for a battery mount to be secured to the first face (1021) of the first fixation portion (1020) and the first face (1031) of the second fixation portion (1030).

14. A mounted battery system (900), comprising:
a battery mount which comprises a mount base (910) and a first mount portion (920) extending from the mount base (910); and
a first battery assembly (930) according to any preceding claim; and
wherein the fixation part (350) of the first battery assembly (930) is secured to the first mount portion (920) of the battery mount.

15. The mounted battery system (900) of Claim 14, wherein the mounted battery system (900) further comprises a plurality of fasteners (955), wherein the plurality of fasteners (955) secure the fixation part (350) of the first battery assembly (930) to the first mount portion (920) of the battery mount, and wherein the mounted battery system (900) further comprises a load-distribution member (950) arranged between the plurality of fasteners (955) and the fixation part (350) and wherein the plurality of fasteners (955) exert force securing the fixation part (350) to the first mount portion (920) of the battery mount through the load-distribution member (950).
